(19) Europäisches Patentamt
European Patent Office
Office européen des brevets

(11) **EP 2 143 197 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **08735220.9**

(22) Anmeldetag: **14.04.2008**

(51) Int Cl.:
*H02P 21/14* (2016.01)    *H02P 23/14* (2006.01)
*H02P 7/00* (2016.01)    *G01L 3/24* (2006.01)

(86) Internationale Anmeldenummer:
**PCT/EP2008/002941**

(87) Internationale Veröffentlichungsnummer:
**WO 2008/135138 (13.11.2008 Gazette 2008/46)**

(54) **VERFAHREN UND VORRICHTUNG ZUR BESTIMMUNG DER MOTORKONSTANTE EINES ELEKTROMOTORS**

METHOD AND DEVICE FOR DETERMINING THE MOTOR CONSTANT OF AN ELECTRIC MOTOR

PROCÉDÉ ET DISPOSITIF POUR DÉTERMINER LA CONSTANTE DE MOTEUR D'UN MOTEUR ÉLECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007 DE 102007020068**

(43) Veröffentlichungstag der Anmeldung:
**13.01.2010 Patentblatt 2010/02**

(73) Patentinhaber: **Kaltenbach & Voigt GmbH**
**88400 Biberach (DE)**

(72) Erfinder:
• **BÜRK, Richard**
**88433 Alberweiler (DE)**
• **BISCHOF, Thomas**
**87758 Illerbeuren (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
EP-A- 1 758 239        WO-A-2007/090760
DE-A1- 19 913 325      DE-B3-102004 045 348
DE-B3-102004 045 348   US-A1- 2004 145 355

EP 2 143 197 B1

**Beschreibung**

Die Erfindung betrifft ein Verfahren und eine Vorrichtung zur Bestimmung der Motorkonstante eines Gleichstrommotors durch Messung von Motorparametern am laufenden Motor.

Bisher werden in elektronischen Motorsteuerungen für die Motormomentenregelung und/oder Motormomentenbegrenzung Motormomentkonstanten $k_M$ verwendet.

Mit Hilfe dieses Zusammenhanges

$$M_{Mot} = k_M \cdot I_{Mot} \qquad (1)$$

kann aufgrund des gemessenen bzw. geregelten Motorstromes $I_{Mot}$ das erzeugte innere Motormoment bestimmt werden (ohne Reibungsverluste, deshalb inneres Moment).

Die Motormomentenkonstante wird dabei in der Regel über eine statistisch ausreichende Anzahl an Motoren an einem Motorenprüfstand messtechnisch ermittelt und dann als Konstante in der Motorsteuerung hinterlegt.

Zur Bestimmung der Motormomentenkonstante wird i. d. Regel eine Drehmomentmesseinreichtung und eine Strommesseinrichtung verwendet und die Motormomentenkonstante dann über die Formel

$$k_M = \frac{M_{Mot}}{I_{Mot}} \qquad (2)$$

errechnet.

Es ist hierbei ersichtlich, dass zur Ermittlung der Motormomentenkonstanten ein großer Messaufwand notwendig ist und nur (je nach Anwendung) ein Mittel-, Maximal- oder Minimalwert der Motormomentenkonstante für die Motorsteuerung verwendet werden kann, sofern keine Kalibrierung für jeden Motor durchgeführt wird.

Die EP 1 758 239 A2 beschreibt ein Verfahren zum Kalibrieren eines Permanentmagnetsynchronmotors.

Der Erfindung liegt die Aufgabe zugrunde, den Messaufwand zur Bestimmung der Motormomentenkonstante zu verringern.

Die Erfindung wird durch das im Anspruch 1 angegebene Verfahren und die im Anspruch 3 angegebene Vorrichtung gelöst.

Eine konkrete Realisierung des erfindungsgemäßen Verfahrens kann gemäß Anspruch 2 darin bestehen, dass die von dem Motor erzeugte Generatorspannung $U_{EMK}$ gemessen wird, und dass die Motormomentenkonstante $k_M$ nach folgender Formel berechnet wird:

erfindungsgemäß für einen Gleichstrommotor

$$k_M = \frac{U_{EMK}}{2\pi \cdot f_{Mot}} \qquad (3)$$

und für eine nicht erfindungsgemäße Variante bei einem 3-Phasen-Synchronmotor

$$k_M = \frac{U_{EMK}}{2\pi \cdot f_{Mot}} \cdot \sqrt{3} \qquad (4)$$

Dabei ist gemäß der erfindungsgemäßen Lösung für einen Gleichstrommotor vorgesehen, dass der Motor vor der Messung der Generatorspannung fremdangetrieben auf eine vorbestimmte Drehzahl gebracht wird, die dann für die Berechnung der Motormomentenkonstante verwendet wird. Bei dieser Variante steht die Drehzahl fest und muss nicht erst gemessen werden, nur noch die von dem Motor erzeugte Generatorspannung muss noch gemessen werden. Der Hilfsmotor ist hierbei ein 3-Phasen-Drehstrommotor, welcher von einem 3-Phasen-Drehstromnetz mit bekannter Frequenz gespeist ist.

Die vorstehenden Formeln ergeben sich wie folgt:
Es gilt:

$$P_{Mech} = M \cdot \omega \qquad (5)$$

wobei $P_{Mech}$ die mechanische Motorleistung, M das Motormoment und $\omega$ die Kreisfrequenz ist.

Es gilt ferner für einen idealen verlustfreien Gleichstrommotor

$$P_{el} = U_{EMK} \cdot I_{Mot} \qquad (6)$$

und für einen idealen verlustfreien 3-Phasen-Synchronmotor

$$P_{el} = U_{EMK, phph} \cdot I_{Mot} \cdot \sqrt{3} \qquad (7)$$

wobei $P_{el}$ die elektrische Motorleistung, $U_{EMK}$ die vom Motor erzeugte Generatorspannung und $I_{Mot}$ der vom Motor erzeugte Generatorstrom ist.

Weiterhin gilt für beide Motortypen

$$P_{Mech} = P_{el} \qquad (8)$$

unter Gleichsetzung der Formeln (5) und (6) erhält man dann für den Gleichstrommotor

$$U_{EMK} \cdot I_{Mot} = M \cdot 2\pi \cdot f_{Mot} \qquad (9)$$

und unter Gleichsetzung der Formeln (5) und (7) für den 3-Phasen-Synchronmotor

$$U_{EMK, phph} \cdot I_{Mot, phph} \cdot \sqrt{3} = M \cdot 2\pi \cdot f_{Mot} \qquad (10)$$

wobei $f_{Mot}$ die Drehzahl des Motors ist, die auch als Umdrehungsfrequenz oder Umlauffrequenz bezeichnet wird. Die Drehzahl ist eine physikalische Größe mit der Dimension 1/Zeit. Sie wird bei Motoren in der Regel mit Umdrehungen/Minute angegeben.

Aus Formel (9) ergibt sich für den Gleichstrommotor:

$$M = \frac{U_{EMK}}{2\pi \cdot f_{Mot}} \cdot I_{Mot} \qquad (11)$$

Aus Formel (10) ergibt sich für den 3-Phasen-Synchronmotor

$$M = \frac{U_{EMK, phph}}{2\pi \cdot f_{Mot}} \cdot I_{Mot, phph} \cdot \sqrt{3} \qquad (12)$$

Kombiniert man die Formeln (2) und (11), so ergibt sich die Formel (3).
Kombiniert man die Formeln (2) und (12) und setzt man cos phi = 1, so ergibt sich die Formel (4). Beides war zu beweisen.

Eine vorteilhafte Ausgestaltung des erfindungsgemäßen Verfahrens ist Gegenstand des Anspruchs 2.

Bei der erfindungsgemäßen Lösung ist somit keine Drehmomentmesseinrichtung erforderlich, die bisher in jedem Fall notwendig war und gerätetechnisch ziemlich aufwändig ist.

Um hoch genaue Momentenregelungen realisieren zu können, muss der Leerlaufstrom ermittelt werden. Dieser Leerlaufstrom beinhaltet motorinterne Verluste (z. B. um Magnetisierungs- und Reibungsverluste), die dann als Offset in die Berechnung des Motormomentes eingehen.

Durch das Verfahren kann eine intelligente Steuerung realisiert werden, mit der der angeschlossene Motor vermessen werden kann, so dass er dann sehr genau das gewünschte Moment abzugeben vermag. Dadurch kann ein Abgleich mit einer externen Momentenprüfeinrichtung in den meisten Fällen entfallen.

Ausführungsbeispiele der Erfindung werden nachfolgend anhand der Zeichnungen beschrieben. Es zeigen:

Figur 1    eine Schaltung zur Bestimmung der Motormomentenkonstante eines Gleichstrommotors, die nicht Gegenstand der Ansprüche ist;

Figur 2    eine erfindungsgemäße Schaltung zur Bestimmung der Motormomentenkonstante zu Figur 1;

Figur 3    eine Schaltung zur Bestimmung der Motormomentenkonstante eines 3-Phasen-Synchronmotors, die nicht Gegenstand der Ansprüche ist.

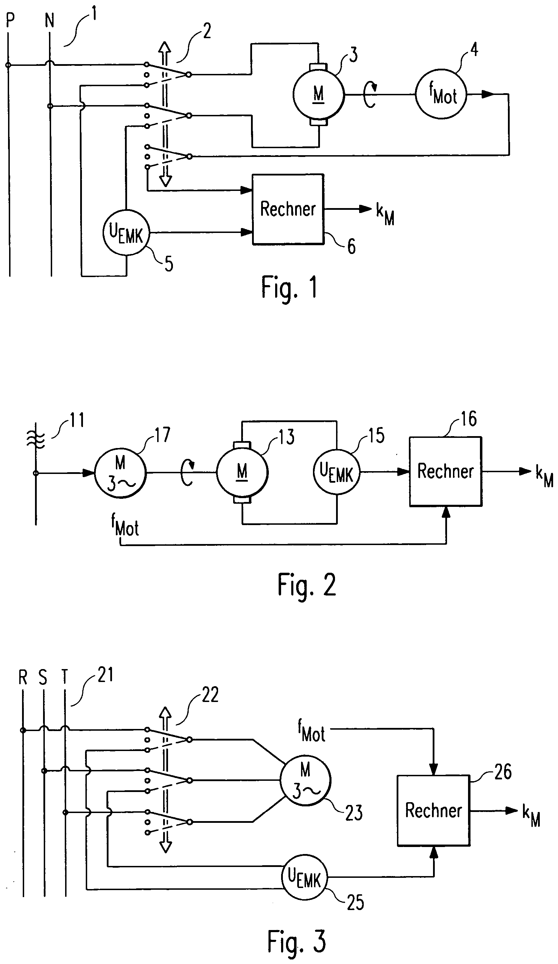

In Figur 1 wird ein Gleichstrommotor 3 über einen Umschalter 2 von einem Gleichstromnetz 1 mit Betriebsspannung versorgt. Der Gleichstrommotor 3 wird in der gezeigten Schaltstellung des Umschalters 2 hochgefahren. Auf der Motorwelle des Gleichstrommotors 3 sitzt ein Drehzahlmessgerät 4, mit dem die Drehzahl $f_{Mot}$ des Gleichstrommotors 3 bestimmt werden kann.

Nachdem der Gleichstrommotor 3 hochgefahren ist, wird er mit dem Umschalter 2 zunächst vom Gleichstromnetz 1 getrennt bis der induktive Betriebsstrom abgeklungen ist. Dann wird der Umschalter 2 in die in gestrichelten Linien angedeutete Schaltstellung umgeschaltet. In dieser Schaltstellung ist mit den Anschlüssen des Gleichstrommotors 3 ein Spannungsmessgerät 5 verbunden, welches die Generatorspannung $U_{EMK}$ des Motors 3 misst. Das Messergebnis wird einem Rechner 6 zugeführt. Dem Rechner 6 wird ferner das Messergebnis des Drehzahlmessers 4 über den Umschalter 2 zugeführt. Der Rechner 6 ermittelt aus der Generatorspannung $U_{EMK}$ und aus der Drehzahl $f_{Mot}$ durch Division nach der eingangs angegebenen Formel (3) die Motormomentenkonstante $k_M$.

Bei der in Figur 2 gezeigten erfindungsgemäßen Lösung wird der Gleichstrommotor 13 nicht durch eigene Kraft hochgefahren, sondern durch mechanische Kopplung mit einem Hilfsmotor 17, der im vorliegenden Fall ein 3-Phasen-Drehstrommotor ist, welcher von einem 3-Phasen-Drehstromnetz 11 gespeist ist. Da das 3-Phasen-Drehstromnetz eine feste bekannte Frequenz hat, kann diese einem Rechner 16 zugeführt werden. Dem Rechner 16 wird außerdem ein Wert der Generatorspannung zugeführt, die durch eine Spannungsmesseinrichtung 15 ermittelt wird, wobei die Spannungsmesseinrichtung 15 mit den elektrischen Anschlüssen des Gleichstrommotors 13 verbunden ist. Der Rechner 16 berechnet wiederum durch Division der Generatorspannung $U_{EMK}$ und der Drehzahl $f_{Mot}$ des Motors nach der eingangs angegebenen Formel (3) die Motormomentenkonstante $k_M$.

Die in Figur 3 gezeigte Schaltung zur Bestimmung der Momentenkonstante $k_M$ ist für einen 3-Phasen-Synchronmotor 23 ausgelegt. Dieser ist über einen Umschalter 22 zunächst an ein 3-Phasen-Drehstromnetz 21 angeschlossen. Nachdem der Motor 23 hochgefahren ist und seine Synchrondrehzahl erreicht hat, wird der Umschalter 22 zunächst in die mittlere Stellung umgeschaltet, in der der Motor 23 vom Netz 21 getrennt ist. In dieser Stellung verharrt der Umschalter 22 solange, bis der induktive Betriebsstrom in dem Motor 23 abgeklungen ist. Dann wird der Umschalter 22 in die untere in gestrichelten Linien angedeutete Schaltstellung umgeschaltet. In dieser Schaltstellung sind zwei der drei Anschlüsse des Motors 23 mit einem Spannungsmessgerät 25 verbunden, welches die von dem nunmehr leerlaufenden Motor 23 erzeugte Generatorspannung 25 misst und das Ergebnis einem Rechner 26 zuführt. Dem Rechner 26 wird außerdem als weiterer Wert die Drehzahl des Motors zugeführt, die durch die Konstruktion des Motors 23 sowie die Frequenz des 3-Phasen-Drehstromnetzes 21 bekannt ist. Der Rechner errechnet aus den ihm zugeführten Werten durch Division nach der eingangs angegebenen Formel (4) dann die Motormomentenkonstante $k_M$.

Mit dem Meßmittel für die Generatorspannung des Motors und dessen Drehzahl sowie den Rechner enthaltenden Vorrichtung zur Bestimmung der Motormomentenkonstanten $k_M$ kann eine Motor-Ansteuerelektronik realisiert werden, die die Motoren selbstständig nach dem beschriebenen Verfahren vermessen kann. Auf diese Weise können Fertigungsschwankungen des Motors ausgeglichen und einen hochgenaue Momentenregelung realisiert werden, ohne dass ein Abgleich erforderlich ist. Die Vorrichtung findet aber nicht nur in der Fertigung Anwendung, sondern auch im Labor, um die Motoren auszumessen, ohne dass ein aufwändiger Prüfstand notwendig ist.

Desweiteren bestünde auch die Möglichkeit, die erfindungsgemäße Vorrichtung in eine Motorsteuerung zu integrieren, welche den angeschlossenen Motor - wie oben geschildert - vermisst und die Messergebnisse, also die hierbei erhaltene Motormomentenkonstante zur genaueren Ansteuerung des Motors, insbesondere für eine Steuerung / Regelung des Drehmoments verwendet.

## Patentansprüche

1.  Verfahren zum Bestimmen der Motormomentenkonstanten $k_M$ eines Gleichstrommotors durch Messung von Motorparametern am laufenden Motor, wobei die Motormomentenkonstante $k_M$ rechnerisch aus der von dem Motor erzeugten Generatorspannung $U_{EMK}$ und der Drehzahl $f_{Mot}$ des Motors ermittelt wird, wobei der Motor vor der Messung der Generatorspannung $U_{EMK}$ durch mechanische Kopplung mit einem Hilfsmotor (17) fremdangetrieben auf eine vorbestimmte Drehzahl f$_{Mot}$ gebracht wird, die für die Berechnung verwendet wird, und wobei der Hilfsmotor (17) ein 3-Phasen-Drehstrommotor ist, welcher von einem 3-Phasen-Drehstromnetz (11) mit bekannter Frequenz gespeist ist.

2. Verfahren nach Anspruch 1,
**dadurch gekennzeichnet,**
**dass** die von dem Motor erzeugte Generatorspannung U$_{EMK}$ gemessen wird, und dass die Motormomentenkonstante k$_M$ nach folgender Formel berechnet wird:

$$k_M = \frac{U_{EMK}}{2\pi \cdot f_{Mot}}$$

3. Vorrichtung zum Bestimmen der Motormomentenkonstante k$_M$ eines Gleichstrommotors, aufweisend:

   (a) Meßmittel für die vom Motor erzeugte Generatorspannung U$_{EMK}$,
   (b) Meßmittel für die Drehzahl f$_{Mot}$ des Motors, und
   (c) einen Rechner, dem die Meßergebnisse der Meßmittel zugeführt werden und der daraus die Motormomentenkonstante k$_M$ berechnet,

   wobei die Vorrichtung einen Hilfsmotor (17) aufweist, der dazu ausgebildet ist, den Motor vor der Messung der Generatorspannung U$_{EMK}$ durch mechanische Kopplung fremdangetrieben auf eine vorbestimmte Drehzahl f$_{Mot}$ zu bringen, die für die Berechnung verwendet wird,
   wobei der Hilfsmotor (17) ein 3-Phasen-Drehstrommotor ist, welcher von einem 3-Phasen-Drehstromnetz (11) mit bekannter Frequenz gespeist ist.

4. Motorsteuergerät, welches einen angeschlossenen Gleichstrommotor entsprechend dem Verfahren nach einem der Ansprüche 1 oder 2 vermisst und die hierbei ermittelte Motormomentenkonstante k$_M$ zur Ansteuerung des Gleichstrommotors verwendet.

**Claims**

1. Method for determining the motor torque constant k$_M$ of a DC motor by measuring motor parameters on the running motor,
   wherein the motor torque constant k$_M$ is computationally determined from the generator voltage U$_{EMK}$ generated by the motor and the speed f$_{Mot}$ of the motor, wherein, before the generator voltage U$_{EMK}$ is measured, the motor is changed to a predetermined speed f$_{Mot}$ used for the calculation in an externally driven manner by means of mechanical coupling to an auxiliary motor (17), and wherein the auxiliary motor (17) is a three-phase motor fed by a three-phase power supply system (11) with a known frequency.

2. Method according to Claim 1,
   **characterized**
   **in that** the generator voltage U$_{EMK}$ generated by the motor is measured, and in that the motor torque constant k$_M$ is calculated according to the following formula:

$$k_M = \frac{U_{EMK}}{2\pi \cdot f_{Mot}}$$

3. Apparatus for determining the motor torque constant k$_M$ of a DC motor, having:

   (a) measuring means for the generator voltage U$_{EMK}$ generated by the motor,
   (b) measuring means for the speed f$_{Mot}$ of the motor, and
   (c) a computer which is supplied with the measurement results from the measuring means and calculates the motor torque constant k$_M$ therefrom,

   wherein the apparatus has an auxiliary motor (17) which is designed, before the generator voltage U$_{EMK}$ is measured, to change the motor to a predetermined speed $f_{Mot}$ used for the calculation in an externally driven manner by means of mechanical coupling,
wherein the auxiliary motor (17) is a three-phase motor fed by a three-phase power supply system (11) with a known frequency.

**4.** Motor control unit which measures a connected DC motor in accordance with the method according to either of Claims 1 and 2 and uses the motor torque constant $k_M$ determined in this case to control the DC motor.

**Revendications**

**1.** Procédé pour déterminer les constantes de couple moteur $k_M$ d'un moteur à courant continu en mesurant des paramètres du moteur sur le moteur en fonctionnement, dans lequel la constante de couple moteur $k_M$ est déterminée par calcul à partir de la tension de générateur $U_{EMK}$ générée par le moteur et de la vitesse de rotation $f_{Mot}$ du moteur, dans lequel, avant de mesurer la tension générateur $U_{EMK}$, le moteur est amené par entraînement externe, au moyen d'un couplage mécanique à un moteur auxiliaire (17), à une vitesse de rotation $f_{Mot}$ déterminée, qui est utilisée pour le calcul et dans lequel le moteur auxiliaire (17) est un moteur à courant triphasé qui est alimenté par un réseau à courant triphasé (11) de fréquence connue.

**2.** Procédé selon la revendication 1,
**caractérisé en ce que** la tension de générateur $U_{EMK}$ générée par le moteur est mesurée, et **en ce que** la constante de couple moteur $k_M$ est calculée selon la formule suivante :

$$k_M \ = \ \frac{U_{EMK}}{2\pi \cdot f_{Mot}}$$

**3.** Dispositif pour déterminer la constante de couple moteur $k_M$ d'un moteur à courant continu, comprenant :

a) des moyens de mesure de la tension de générateur $U_{EMK}$ générée par le moteur,
b) des moyens de mesure de la vitesse de rotation $f_{Mot}$ du moteur ; et
c) un calculateur auquel sont transmis les résultats de mesure des moyens de mesure, à partir desquels est calculée la constante de couple moteur $k_M$,

dans lequel le dispositif comprend un moteur auxiliaire (17) qui est conçu, avant de mesurer la tension de générateur $U_{EMK}$, pour amener le moteur par entraînement externe, au moyen d'un couplage mécanique, à une vitesse de rotation prédéterminée $f_{Mot}$, qui est utilisée pour effectuer le calcul,
dans lequel le moteur auxiliaire (17) est un moteur à courant triphasé qui est alimenté à partir d'un réseau à courant triphasé (11) de fréquence connue.

**4.** Appareil de commande de moteur qui effectue une mesure sur un moteur à courant continu raccordé conformément au procédé défini selon les revendications 1 ou 2 et utilise la constante de couple moteur $k_M$ ainsi déterminée pour commander le moteur à courant continu.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1758239 A2